# FASCICULE DE BREVET EUROPEEN

(11) **EP 3 319 875 B1**
(45) Date de publication et mention de la délivrance du brevet: **04.09.2019**
(21) Numéro de dépôt: 16736081.7
(22) Date de dépôt: 05.07.2016
(51) Int. Cl.: B64D 15/04, B64C 21/06, B64C 21/08

(54) **SYSTEME POUR LA GESTION DUALE DE L'ANTIGIVRAGE ET DE L'ASPIRATION DE LA COUCHE LIMITE SUR UNE SURFACE PORTANTE D'UN AERONEF, COMPRENANT UNE FONCTION DE COLLECTE DE L'AIR D'ANTIGIVRAGE**
SYSTEM ZUR DUALEN VERWALTUNG EINER VEREISUNGSSCHUTZ- UND GRENZSCHICHTABSAUGUNG AUF EINER TRAGFLÄCHE EINES FLUGZEUGS MIT EINER FUNKTION ZUM AUFFANGEN DER VEREISUNGSSCHUTZLUFT
SYSTEM FOR DUAL MANAGEMENT OF ANTI-ICING AND BOUNDARY LAYER SUCTION ON AN AEROFOIL OF AN AIRCRAFT, INCLUDING A FUNCTION OF COLLECTING THE ANTI-ICING AIR

(30) Priorité: 07.07.2015 BE 201505427
(43) Date de publication de la demande: 16.05.2018
(73) Titulaire: Sonaca S.A., 6041 Gosselies (BE)
(72) Inventeur: GUEUNING, Dimitri, 1330 Rixensart (BE); DEBAISIEUX, Stéphane, 1495 Sart-Dames-Avelines (BE)
(74) Mandataire: Brevalex
(86) Numéro de dépôt international: PCT/EP2016/065829
(87) Numéro de publication internationale: WO 2017/005737

(56) Documents cités:
- US-B2- 7 673 832

## Description

### DOMAINE TECHNIQUE

La présente invention se rapporte au domaine de la gestion de la fonction antigivrage d'une surface portante d'un aéronef, et de la gestion de l'aspiration de la couche limite sur cette même surface portante.

Les surfaces portantes concernées sont de préférence les ailes ou l'empennage de l'aéronef.

L'invention s'applique à tous les types d'aéronefs, en particulier les avions commerciaux.

### ÉTAT DE LA TECHNIQUE ANTÉRIEURE

De l'art antérieur, il est connu des systèmes d'antigivrage d'ailes d'avions, comprenant des canaux à travers lesquels circule de l'air chaud prélevé sur les moteurs, pour éviter la formation de givre sur les ailes. Les principales phases de vol durant lesquelles un tel système est actionné sont le décollage, l'atterrissage, ou encore l'attente d'atterrissage.

De l'art antérieur, il est également connu des systèmes d'aspiration de la couche limite sur les ailes. Cette aspiration est réalisée à l'aide de canaux délimités en partie par la peau extérieure de l'aile, qui est multiperforée pour permettre l'aspiration. Celle-ci a pour but de diminuer la trainée des ailes. Elle est essentiellement mise en oeuvre durant la phase de croisière, également dénommée « cruise ».

Sur l'aile, les canaux d'antigivrage et les canaux d'aspiration de la couche limite peuvent être agencés en alternance. Néanmoins, dans certaines zones de la surface portante comme par exemple le nez du bord d'attaque, il peut y avoir un intérêt à assurer alternativement la fonction d'antigivrage, et celle d'aspiration de la couche limite. Ce besoin peut conduire à la mise en oeuvre d'un ou plusieurs canaux à double fonction, dans lesquels peut alternativement circuler de l'air d'antigivrage et de l'air pour l'aspiration de la couche limite. Ce type de réalisation est par exemple connu du document US 7 673 832.

Néanmoins, la solution décrite dans ce document est perfectible, en particulier en termes de performance d'antigivrage et de simplicité de conception.

### EXPOSÉ DE L'INVENTION

L'invention a ainsi pour but de remédier au moins partiellement aux inconvénients relatifs aux réalisations de l'art antérieur.

Pour ce faire, l'invention a tout d'abord pour objet un système d'antigivrage et d'aspiration de couche limite, destiné à équiper une surface portante d'un aéronef, le système comprenant :
- au moins un canal d'antigivrage ;
- au moins un canal d'aspiration délimité en partie par une paroi multiperforée permettant l'aspiration de la couche limite sur ladite surface portante ;
- un dispositif de contrôle de l'aspiration de la couche limite ;
- un dispositif de contrôle d'antigivrage ;
- une conduite de collecte de l'air d'aspiration communiquant avec ledit canal d'aspiration ;
- une conduite d'alimentation en air d'antigivrage raccordée audit dispositif de contrôle d'antigivrage et communiquant avec ledit canal d'antigivrage par l'intermédiaire d'un conduit d'admission d'air d'antigivrage.

Selon l'invention, le dispositif de contrôle de l'aspiration de la couche limite comporte une vanne à trois voies sur lesquelles sont respectivement raccordées ladite conduite de collecte de l'air d'aspiration, une conduite d'aspiration, et une conduite d'échappement d'air d'antigivrage, et le système comporte de plus un conduit de collecte d'air d'antigivrage raccordé d'une part au canal d'antigivrage, et d'autre part à ladite conduite de collecte de l'air d'aspiration.

L'invention est remarquable à plusieurs égards, tout d'abord en ce qu'elle prévoit une fonction de récupération de l'air d'antigivrage sortant du / des canaux d'antigivrage. Avantageusement, cet air chaud n'est pas libéré à l'intérieur de la surface portante, susceptible de présenter des éléments / équipements sensibles à la chaleur. Cet air chaud d'antigivrage est au contraire amené dans la conduite de collecte de l'air d'aspiration, qui est ainsi fonctionnalisée pour participer au mode d'antigivrage. L'air chaud peut ensuite s'échapper par la conduite d'échappement reliée à la vanne trois voies, cette conduite d'échappement d'air d'antigivrage pouvant déboucher dans une zone de l'aéronef moins sensible à la chaleur, de préférence à distance des atmosphères à vapeur de carburant et/ou d'éléments en matériau composite.

En outre, le fait de collecter l'air d'antigivrage en sortie du / des canaux d'antigivrage confère de meilleures performances d'antigivrage, puisque cela permet d'appliquer un débit plus élevé de circulation de cet air au sein des canaux concernés. Egalement, puisque la conduite de collecte de l'air d'aspiration et la conduite d'alimentation en air d'antigivrage sont deux éléments distincts, cette dernière peut présenter une faible section limitant les pertes par échange thermique avec l'extérieur de cette conduite.

En outre, l'invention présente une conception simplifiée, notamment en ce sens qu'elle ne requiert pas obligatoirement la multiperforation de tous ses canaux d'antigivrage, mais également car elle ne nécessite qu'un faible nombre de vannes de commande, ce qui participe également à l'amélioration de sa fiabilité.

Enfin, il est noté que préférentiellement, l'invention ne requiert aucun clapet anti-retour.

L'invention présente également au moins l'une des caractéristiques optionnelles suivantes, prises isolément ou en combinaison.

Ladite conduite de collecte de l'air d'aspiration ainsi que la conduite d'alimentation en air d'antigivrage sont agencées sensiblement parallèlement, de préférence selon une direction d'envergure de la surface portante.

Le système comporte au moins un canal à double fonction dans lequel peut alternativement circuler de l'air pour la fonction d'antigivrage et de l'air pour l'aspiration de la couche limite, ledit canal à double fonction étant en partie délimité par la paroi multiperforée permettant l'aspiration de la couche limite sur ladite surface portante, et ledit canal à double fonction :
- communique avec ledit conduit d'admission d'air d'antigivrage ; et
- de préférence, communique avec un conduit de collecte d'air d'aspiration, ce dernier étant relié à ladite conduite de collecte de l'air d'aspiration, de préférence via une vanne commandée.

De préférence, la conduite de collecte de l'air d'aspiration et la conduite d'alimentation en air d'antigivrage s'étendent selon une direction d'envergure de la surface portante, à la fois pour un système du type « concept longitudinal », et pour un système du type « concept corde ».

A cet égard, dans le « concept longitudinal » dans lequel les canaux s'étendent en totalité ou pour la plupart selon la direction d'envergure, il est préférentiellement fait en sorte que l'air d'antigivrage circulant à travers le canal à double fonction ne pénètre pas dans ledit conduit de collecte d'air d'antigivrage.

De plus, le système comprend alors préférentiellement au moins un conduit secondaire de collecte d'air d'aspiration permettant la communication entre chaque canal d'aspiration de la couche limite, et la conduite de collecte de l'air d'aspiration.

De préférence, le système comporte plusieurs canaux d'antigivrage et plusieurs canaux d'aspiration de la couche limite sensiblement parallèles, avec au moins certains des canaux d'antigivrage et des canaux d'aspiration de la couche limite agencés en alternance.

Le système comprend successivement, dans une direction de corde à partir d'un bord d'attaque de la surface portante :
- un canal à double fonction ;
- une pluralité desdits canaux d'antigivrage ; puis
- une alternance entre lesdits canaux d'aspiration d'air et les autres canaux d'antigivrage,

lesdits canaux d'antigivrage, lesdits canaux d'aspiration et ledit canal à double fonction s'étendant parallèlement les uns aux autres, selon une direction d'envergure de la surface portante.

Toujours dans le « concept longitudinal », il est préférentiellement prévu que le conduit d'admission d'air d'antigivrage, chaque conduit de collecte d'air d'aspiration, chaque conduit secondaire de collecte d'air d'aspiration et le conduit de collecte d'air d'antigivrage suivent chacun le profil aérodynamique de la surface portante, en étant agencés dans des plans parallèles, espacés les uns des autres selon une direction d'envergure de cette surface portante.

Dans le concept « concept corde » dans lequel les canaux s'étendent pour la plupart selon la direction de corde, le système comprend préférentiellement une pluralité de canaux à double fonction dans lesquels peut alternativement circuler de l'air pour la fonction d'antigivrage et de l'air pour l'aspiration de la couche limite, parmi lesquels :
- un canal principal à double fonction, communiquant directement avec ledit conduit d'admission d'air d'antigivrage ; et
- des canaux secondaires à double fonction, communiquant d'une part avec le canal principal à double fonction et d'autre part avec ledit conduit de collecte d'air d'antigivrage, lesdits canaux secondaires à double fonction étant agencés sensiblement parallèlement entre eux et sensiblement orthogonalement au canal principal à double fonction et au conduit de collecte d'air d'antigivrage.

De préférence, lesdits canaux secondaires à double fonction sont agencés dans des plans parallèles, espacés les uns des autres selon une direction d'envergure de la surface portante.

La conduite de collecte de l'air d'aspiration, la conduite d'alimentation en air d'antigivrage, le canal principal à double fonction et le conduit de collecte d'air d'antigivrage sont agencés sensiblement parallèlement selon une direction d'envergure de la surface portante.

De préférence, la conduite de collecte de l'air d'aspiration et le conduit de collecte d'air d'antigivrage communiquent entre eux par l'intermédiaire d'au moins un conduit de jonction.

L'invention a également pour objet une surface portante pour aéronef comprenant au moins un système d'antigivrage et d'aspiration de couche limite, tel que décrit ci-dessus. La surface portante est préférentiellement une aile ou un empennage, de préférence un empennage vertical, ou éventuellement un empennage horizontal.

Enfin, l'invention a aussi pour objet un aéronef comprenant au moins une telle surface portante ou au moins un tel système d'antigivrage et d'aspiration de la couche limite.

D'autres avantages et caractéristiques de l'invention apparaîtront dans la description détaillée non limitative ci-dessous.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des dessins annexés parmi lesquels ;
- la figure 1 représente une vue en perspective d'un avion équipé de deux ailes selon l'invention ;
- la figure 2 représente une vue schématique en coupe transversale d'une partie avant de l'une des ailes de l'avion montré sur la figure précédente, l'aile étant équipée d'un système d'antigivrage et d'aspiration de la couche limite, selon un premier mode de réalisation préféré de l'invention ;
- la figure 3 est une vue schématique de dessus du système montré sur la figure 2 ;
- la figure 4 est une vue en perspective de celle montrée sur la figure 2 ;
- la figure 5 est une vue partielle et agrandie de celle montrée sur la figure précédente, selon un autre angle de perspective ;
- les figures 6a à 7b montrent des vues en perspective représentant les moyens mis en oeuvre pour l'alimentation des canaux d'antigivrage du système, et pour la collecte de l'air d'antigivrage ;
- la figure 8 est une vue similaire à celle de la figure 3, schématisant le fonctionnement du système lors d'une phase d'antigivrage de l'aile ;
- la figure 9 est une vue en perspective de la partie avant de l'aile, schématisant également le fonctionnement du système lors d'une phase d'antigivrage ;
- la figure 10 est une vue en perspective montrant les zones de l'aile bénéficiant de la fonction d'antigivrage ;
- la figure 10a représente une demi-vue de dessus d'un aéronef, sur laquelle il a été représenté un exemple d'implantation du système montré sur les figures précédentes ;
- les figures 11 à 13 représentent respectivement des vues similaires à celles des figures 8 à 10, schématisant le fonctionnement du système lors d'une phase d'aspiration de la couche limite ;
- la figure 14 représente une vue similaire à celle de la figure 3, avec le système se présentant sous la forme d'un second mode de réalisation préféré de l'invention ;
- la figure 15 représente une vue schématique en coupe transversale d'une partie avant de l'une des ailes de l'avion intégrant le système montré sur la figure 14;
- la figure 16 est une vue similaire à celle de la figure 14, schématisant le fonctionnement du système lors d'une phase d'antigivrage de l'aile ; et
- la figure 17 est une vue similaire à celle de la figure 14, schématisant le fonctionnement du système lors d'une phase d'aspiration de la couche limite.

### EXPOSÉ DÉTAILLÉ DE MODES DE RÉALISATION PARTICULIERS

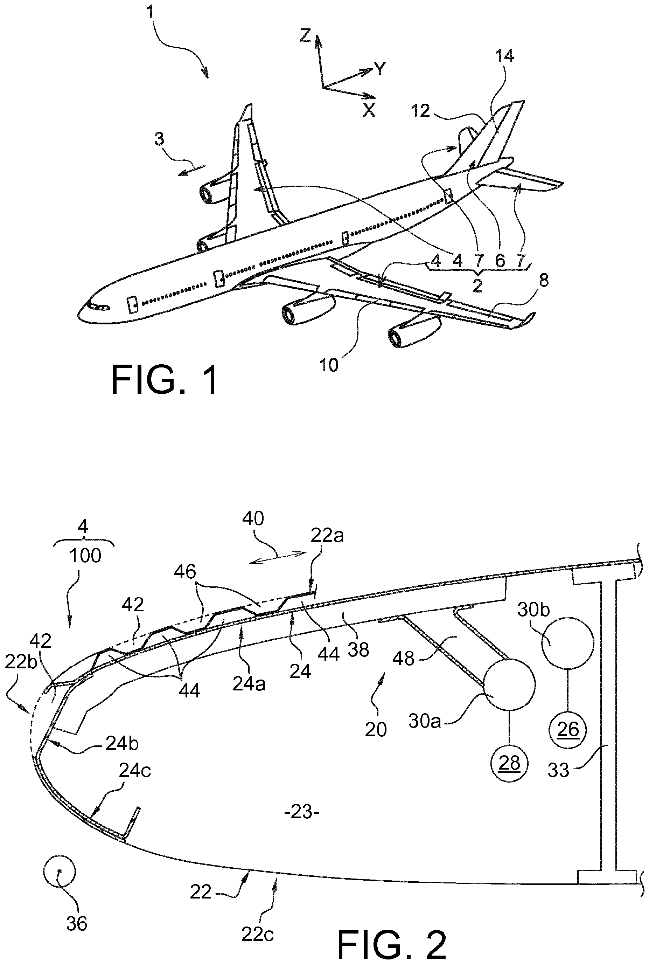

En référence à la figure 1, il est montré un avion 1 du type avion commercial, sur lequel est appliquée la présente invention. De manière classique, l'avion 1 comporte un ensemble 2 de surfaces portantes comprenant deux ailes 4, un empennage vertical 6 également dit « dérive verticale », et deux empennages horizontaux 7. L'invention est particulièrement applicable à la partie avant 10 des ailes 4 et de l'empennage vertical 6, mais peut aussi s'appliquer aux empennages horizontaux 7. A cet égard, il est noté que dans la description, les termes « avant » et « arrière » sont à considérer selon une direction d'avancement 3 de l'avion, suite à la poussée exercée par ses moteurs.

L'invention concerne un système 20 d'antigivrage et d'aspiration de la couche limite sur une surface portante. Dans la description ci-dessous, la surface portante est l'une des ailes 4, et le système 20 est implanté à l'intérieur de la partie avant 10 de cette aile, comprenant le bord d'attaque. Néanmoins, il est noté que l'invention pourrait être appliquée de manière identique ou similaire à l'autre aile 4, ou encore à la partie avant de l'empennage vertical 6. De plus, il s'agit ici d'une implantation dans une partie avant fixe de l'aile, même si l'implantation dans un volet mobile de bord d'attaque pourrait être envisagée, sans sortir du cadre de l'invention.

En référence à la figure 2, il est représenté la partie avant 10 de l'aile intégrant le système 20. La partie avant 10 comprend une peau externe 22 définissant successivement une zone d'extrados 22a, une zone de nez 22b et une zone d'intrados 22c. Par ailleurs, le système 20 comporte une peau interne 24 comprenant également une zone d'extrados 24a, une zone de nez 24b et une zone d'intrados 24c. Les deux zones d'extrados 22a, 24a sont espacées l'une de l'autre de manière à définir une pluralité de canaux longitudinaux de circulation d'air, qui seront détaillés ci-après et qui peuvent être fabriqués de la manière exposée dans le document EP 1327 489. Les deux zones de nez 22b, 24b sont également espacées l'une de l'autre, de manière à définir entre elles un canal à double fonction, qui sera également décrit ci-dessous. En revanche, les deux zones d'intrados 22c, 24c sont sensiblement plaquées l'une contre l'autre, étant néanmoins précisé que dans cette zone, la peau interne 24 ne s'étend que sur une faible longueur vers l'arrière, comme cela est visible sur la figure 2. Comme cela sera indiqué ci-après, des fentes peuvent être prévues entre les deux zones plaquées d'intrados 22c, 24c, de manière à permettre l'évacuation de l'air chaud provenant du canal à double fonction, et assurer ainsi l'antigivrage de la partie intrados du bord d'attaque.

En référence conjointement aux figures 2 à 5, le système 20 de gestion duale de la fonction d'antigivrage et de l'aspiration de la couche limite comporte tout d'abord un dispositif 26, pour le contrôle de l'aspiration de la couche limite. Il s'agit d'une vanne 26 commandée électriquement, du type vanne à trois voies 26a, 26b, 26c. Cette vanne 26 permet en particulier de faire circuler un débit d'air destiné à être aspiré par une pompe 27 ou similaire, agencée sur une conduite d'aspiration 29 raccordée à la première voie 26a de la vanne 26. La seconde voie 26b est raccordée à une conduite d'échappement 31 dont la fonction sera décrite ci-après, tandis que la troisième voie 26c est raccordée à une conduite 30b d'échappement d'air d'antigivrage qui sera également décrite ultérieurement.

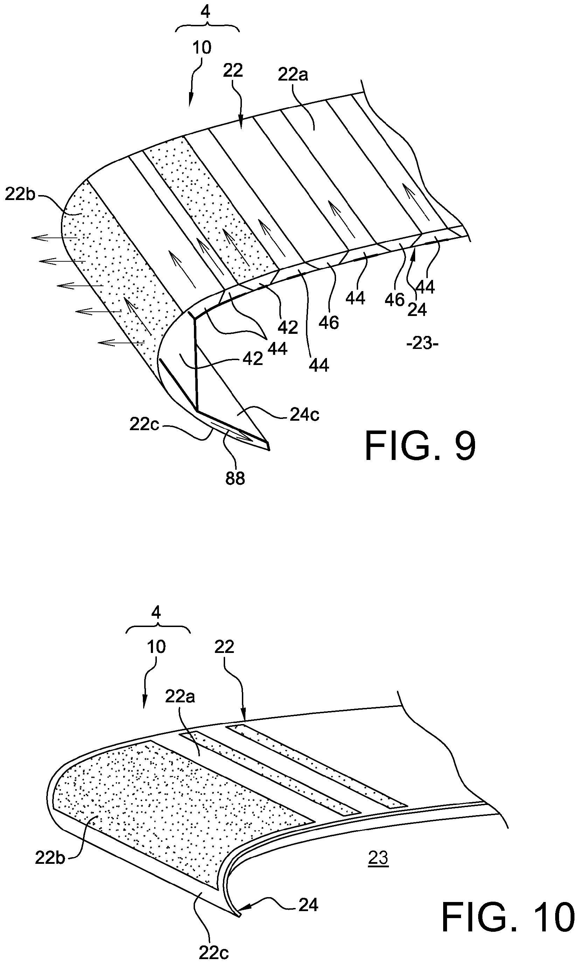

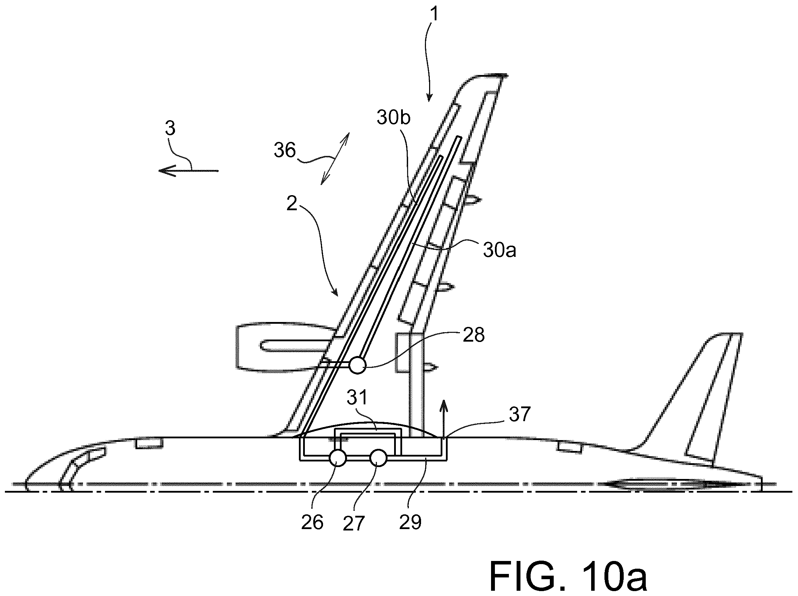

A titre indicatif, il est noté que de manière conventionnelle, la pompe est agencée en dehors de l'aile, de même que la conduite d'échappement 31 débouche dans une zone non sensible à la chaleur, en dehors de la surface portante, comme cela sera décrit en référence à la figure 10a.

Le système 20 comprend aussi un dispositif 28 de contrôle d'antigivrage, ce dispositif étant conventionnel, de préférence du type vanne de régulation commandée électriquement. Cette vanne 28, également dénommée WAIV (de l'anglais « Wing Anti-Icing Valve »), permet de réguler le débit d'air chaud prélevé sur les moteurs et injecté entre les peaux externe et interne pour éviter le givrage des zones concernées. Cet air chaud prélevé sur les moteurs est dit « air d'antigivrage ».

Le dispositif 28 est raccordé sur une conduite 30a d'alimentation en air d'antigivrage, faisant partie intégrante du système 20. Contrairement à la conduite 30b qui est utilisée pour les phases d'aspiration de la couche limite sur l'aile, cette conduite 30a est utilisée durant les phases d'antigivrage, comme cela ressortira clairement ci-après.

Les deux conduites 30a, 30b sont droites, s'étendant parallèlement à la direction 36 de l'envergure de l'aile, dans l'espace libre 23 de la partie avant 10 de l'aile, défini entre les zones d'extrados 22a, 24a et la zone d'intrados 22c. Cet espace libre 23 est délimité vers l'arrière par un longeron avant 33 de l'aile, ce longeron 33 remplissant de manière connue une fonction structurale de l'aile. Les deux conduites 30a, 30b cheminent parallèlement à proximité de ce longeron avant 33 s'étendant selon la direction d'envergure 36.

A l'extrémité opposée à celle sur laquelle se trouvent les vannes 26, 28, les conduites 30a, 30b sont obturées. Avant leur obturation, elles peuvent servir au fonctionnement d'un ou plusieurs autres modules tel que celui qui sera décrit ci-après.

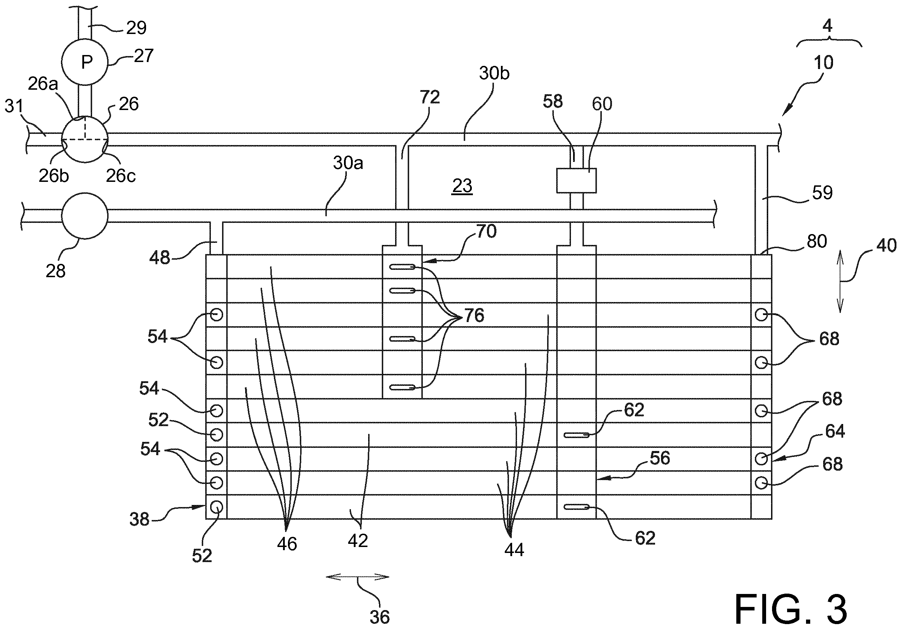

Comme évoqué ci-dessus, le système 20 comporte une pluralité de canaux de circulation d'air, définis entre les peaux externe 22 et interne 24, et agencés parallèlement à la direction d'envergure 36, en étant sensiblement droits. De l'avant vers l'arrière, il s'agit successivement d'un canal à double fonction 42, d'une pluralité de canaux d'antigivrage adjacents 44, d'un autre canal à double fonction 42, puis d'une alternance entre des canaux d'aspiration d'air 46 et d'autres canaux d'antigivrage 44. Cette alternance peut néanmoins être rompue, par exemple en prévoyant successivement deux canaux d'aspiration 46 comme cela a été représenté schématiquement sur la figure 3, à proximité des conduites 30a, 30b.

Chaque canal à double fonction 42 est spécifique puisqu'il est prévu pour y faire circuler alternativement de l'air d'antigivrage, et de l'air pour l'aspiration de la couche limite. Pour la mise en oeuvre de cette seconde fonction, pour ce qui concerne le canal 42 le plus avant, la zone de nez 22b qui le délimite prend la forme d'une paroi multiperforée permettant l'aspiration de la couche limite, d'une manière connue de l'homme du métier. La peau externe 22 présente ainsi une multiperforation à cet endroit de la zone de nez 22b, tout comme dans la zone d'extrados 22a pour la réalisation du canal à double fonction 42 le plus arrière.

Une telle multiperforation est également prévue sur les parties de la zone d'extrados 22a délimitant les canaux 46 d'aspiration de la couche limite. En revanche, les autres parties de la zone d'extrados de la peau externe 22, délimitant les canaux d'antigivrage 44, sont dépourvues d'une telle multiperforation puisqu'ils ne sont pas dédiés à l'aspiration de la couche limite. Il est noté que la répartition des canaux 42, 44, 46 est ici donnée uniquement à titre d'exemple indicatif, mais que cette répartition peut être adaptée en fonction des besoins spécifiques rencontrés sur chaque surface portante, en termes de d'antigivrage et d'aspiration.

Les canaux 44, 46 présentent de sections de tailles et de formes identiques ou similaires, par exemple de section trapézoïdale. Le canal à double fonction 42, situé au niveau du nez, présente quant à lui une section plus importante, de forme davantage complexe.

Le système 20 comporte par ailleurs une pluralité de conduits permettant de faire communiquer les canaux 42, 44, 46 avec les conduites 30a, 30b.

Ces conduits, qui seront décrits ci-après, s'étendent chacun selon une direction de corde 40 en étant agencés dans des plans parallèles espacés les uns des autres selon la direction d'envergure 36. Ces conduits ne sont pas droits, mais ils suivent chacun le profil aérodynamique de l'aile en étant logé sous la peau interne 24. Chacun d'eux prend la forme d'un capot ouvert vers le haut et plaqué contre la peau interne 22, celle-ci participant donc également à la formation de ces conduits. Alternativement, au moins certains de ces conduits peuvent être réalisés directement par un conformage particulier de la peau interne 24.

Il s'agit tout d'abord d'un conduit d'admission d'air d'antigivrage 38, raccordé à la conduite 30a au plus près de la vanne 28. Plus précisément, ce raccordement s'effectue par un conduit de jonction 48 de faible longueur, situé sur ou à proximité d'une extrémité arrière du conduit 38. Le conduit de jonction 48 établit une communication fluidique permanente entre la conduite 30a en aval de la vanne 28, et le conduit 38.

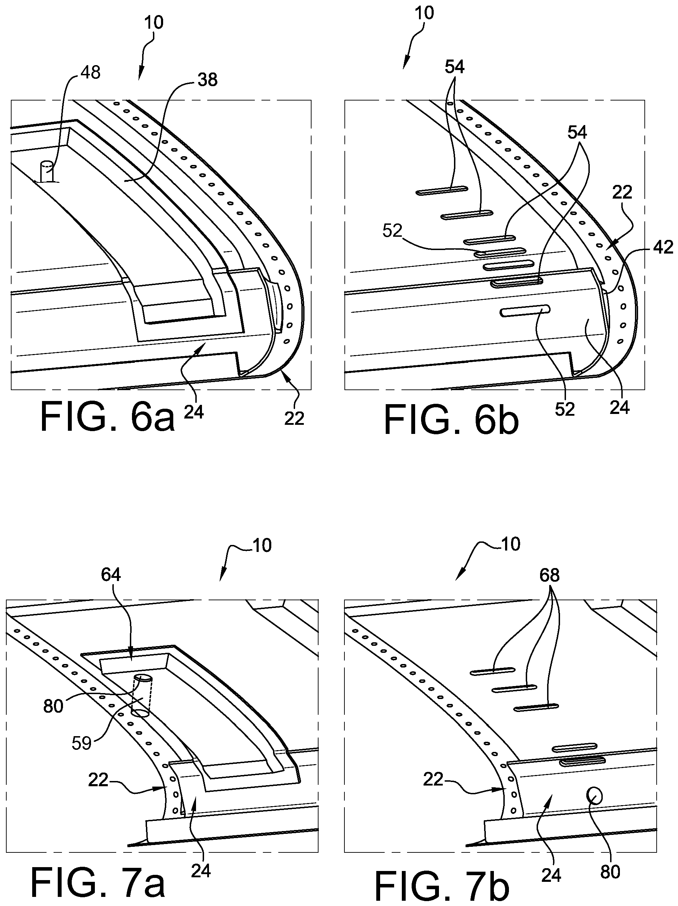

A son extrémité avant, le conduit d'admission d'air d'antigivrage 38 communique avec une première extrémité du canal 42 à double fonction, par le biais d'un orifice d'entrée d'air d'antigivrage 52 pratiqué à travers la peau interne 24. Des orifices analogues 54 sont prévus le long de la direction de corde 40, de manière à assurer la communication entre le conduit 38 et les canaux d'antigivrage 44, ainsi que la communication entre le conduit 38 et l'autre canal à double fonction 42. De tels orifices 52, 54 peuvent par exemple être de section circulaire comme cela a été montré de manière schématique sur la figure 3, ou bien de forme oblongue comme cela est visible sur la figure 6b. A cet égard, il est noté que cette figure 6b correspond à la figure 6a, sans le conduit 38 qui a été retiré pour rendre visibles ces orifices 52, 54.

Le système 20 comporte en outre plusieurs conduits de collecte d'air d'aspiration 56, dont un seul a été représenté sur la figure 3. Ce conduit 56 est raccordé à la conduite d'échappement d'air d'antigivrage 30b, à l'aide d'un conduit de jonction 58 de faible longueur, situé sur ou à proximité d'une extrémité arrière du conduit 56. Le conduit de jonction 56 est équipé d'une vanne commandée 60 autorisant ou interdisant le passage de l'air d'aspiration entre le conduit 56 et la conduite 30b, en fonction de sa position. A son extrémité avant, le conduit de collecte d'air d'aspiration 56 communique avec le canal avant 42 à double fonction, par le biais d'un orifice d'aspiration 62 pratiqué à travers la peau interne 24. Il en est de même pour le raccordement avec le canal à double fonction 42 situé plus en arrière.

Le conduit de collecte d'air d'aspiration 56 est raccordé au canal avant 42 en aval du raccordement du conduit 38, au regard d'une direction de circulation de l'air d'antigivrage à travers le canal 42 pendant une phase d'antigivrage.

Chaque canal à double fonction 42 présente de préférence une extrémité obturée à l'opposé de celle intégrant l'orifice d'entrée d'air d'antigivrage 52. En revanche, le système 20 comporte aussi un conduit de collecte d'air d'antigivrage 64, qui communique avec les canaux d'antigivrage 44 au niveau d'une extrémité de ceux-ci opposée à l'extrémité de raccordement avec le conduit 38. Le conduit 64 est ainsi disposé à l'extrémité de la partie avant 10 de l'aile, opposée à l'extrémité logeant le conduit d'admission d'air d'antigivrage 38.

A son extrémité aval, le conduit de collecte d'air d'antigivrage 64 présente la particularité d'être raccordé à la conduite 30b par l'intermédiaire d'un conduit de jonction 59 de faible longueur. Le conduit de jonction 59 établit une communication fluidique permanente entre la conduite 30b en amont de la vanne 26, et le conduit 64.

La communication entre le conduit 64 et les canaux d'antigivrage 44 s'effectue par le biais d'orifices de collecte d'air d'antigivrage 68, également pratiqués à travers la peau interne 24. Ces orifices 68 sont ainsi agencés à l'extrémité aval des canaux d'antigivrage 44, au regard d'une direction de circulation de l'air d'antigivrage à travers ces canaux 44 pendant une phase d'antigivrage.

De tels orifices 68 peuvent par exemple être de section circulaire comme cela a été montré de manière schématique sur la figure 3, ou bien de forme oblongue comme cela est visible sur la figure 7b. A cet égard, il est noté que cette figure 7b correspond à la figure 7a, sans le conduit 64 qui a été retiré pour rendre visibles les orifices 68. Il est noté par ailleurs que le conduit 64 présente au niveau de son extrémité aval un orifice de sortie d'air d'antigivrage 80, sur lequel est raccordé le conduit de jonction 59.

Le système 20 comporte également un ou plusieurs conduits secondaires de collecte d'air d'aspiration 70, dont un seul a été représenté sur la figure 3. Ce conduit 70 est raccordé à la conduite 30b, le raccordement s'effectuant à l'aide d'un conduit de jonction 72 de faible longueur, situé sur ou à proximité d'une extrémité arrière du conduit 70. Le conduit de jonction 72 établit une communication fluidique permanente entre la conduite 30b en aval de la vanne 26, et le conduit 70.

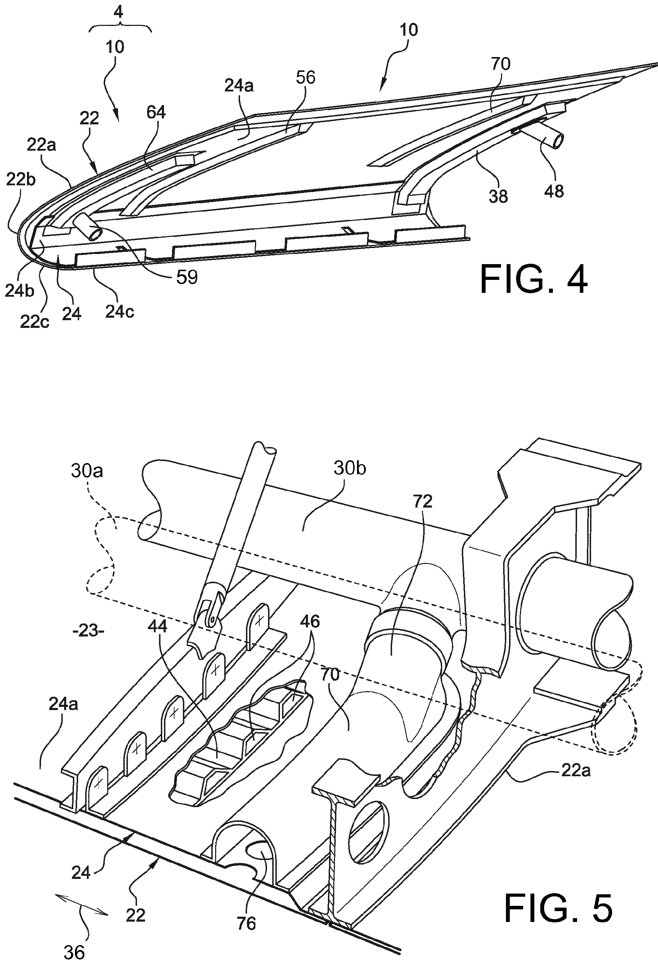

Chaque conduit secondaire de collecte d'air d'aspiration 70 communique avec chacun des canaux d'aspiration 46, par le biais d'orifices secondaires d'aspiration 76 pratiqués à travers la peau interne 24, comme cela est montré sur la vue agrandie de la figure 5.

Les conduits 38, 70, 56, 64, situés dans des plans parallèles espacés les uns des autres selon la direction d'envergure 36, sont agencés dans l'ordre énoncé ci-dessus, dans la direction d'écoulement du fluide à travers le canal de nez 42. Néanmoins, un ordre différent aurait pu être retenu, sans sortir du cadre de l'invention.

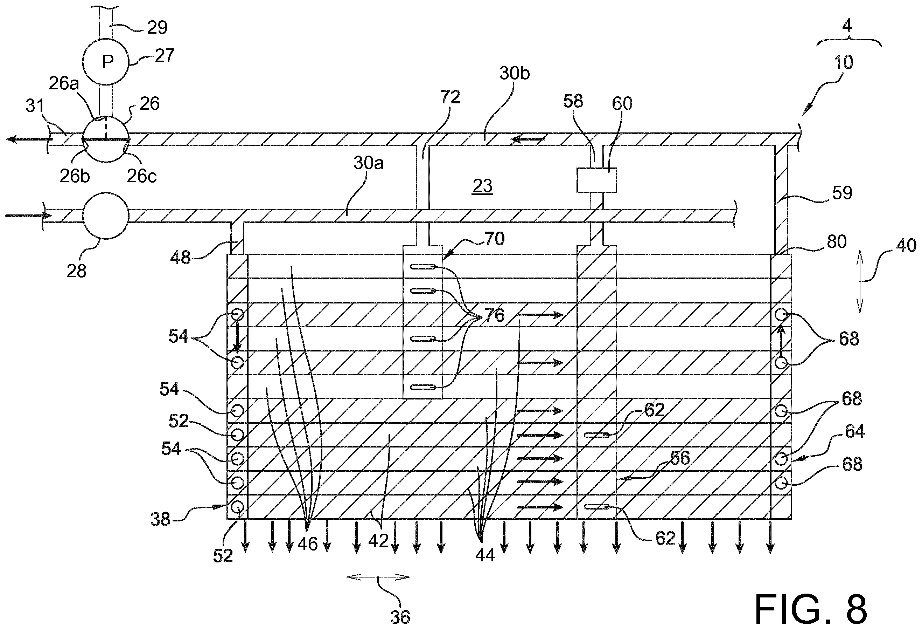

En référence à présent aux figures 8 à 10, il est représenté le fonctionnement du système 20 lors d'une phase d'antigivrage de la partie avant 10 de l'aile 4. Sur ces figures, les flèches symbolisent la direction de circulation de l'air chaud à travers les différents éléments du système. De plus, les zones grisées et hachurées correspondent aux zones empruntées par l'air d'antigivrage.

Pendant la phase d'antigivrage, la vanne 26 établit la communication fluidique entre les deux voies 26b, 26c, de manière à faire communiquer la conduite 30b avec la conduite d'échappement 31. De plus, la vanne 60 est commandée de manière à interdire le passage entre le conduit 56 et la conduite 30b.

Pour activer cette fonction d'antigivrage, la vanne WAIV 28 est commandée de manière à laisser circuler de l'air chaud provenant des moteurs, à travers la conduite dédiée 30a. L'air transite ensuite par le conduit de jonction 48 avant de rejoindre le conduit d'admission d'air d'antigivrage 38, à partir duquel cet air chaud est distribué dans les deux canaux à double fonction 42 via les orifices 52, et dans les canaux d'antigivrage 44 via les orifices 54. A la sortie de ces canaux 44, l'air d'antigivrage est collecté par le conduit 64 via les orifices 68, puis l'air emprunte le canal de jonction 58 avant d'atteindre la conduite 30b. Il s'extrait de cette conduite 30a via la vanne trois voies 26, puis circule à travers la conduite d'échappement 31 en direction d'une zone située en dehors de l'aile. A ce propos, sur la figure 10a, il a été représenté une possibilité d'implantation du système sur un aéronef 1, figure sur laquelle il est montré les deux conduites 30a, 30b cheminant parallèlement à la direction d'envergure 36. Sur cette figure 10a, il est également montré que la vanne 28 se trouve préférentiellement sur l'aile 2, tandis que la vanne trois voies 26 se trouve préférentiellement dans la partie fuselage. De plus, la conduite d'échappement 31 peut être raccordée en aval de la pompe 27 sur la conduite d'aspiration 29, de manière à former en aval une même et seule conduite présentant une sortie 37 débouchant au niveau du fuselage, derrière l'aile 2. C'est par conséquent par cette sortie 37 que l'air de dégivrage est extrait, comme cela a été schématisé par la flèche sur cette figure 10a.

Il est par ailleurs noté que durant l'antigivrage, l'air ne remonte préférentiellement pas par le conduit de jonction 72 en direction des canaux d'aspiration 46, car la section de passage du conduit 30b est plus importante que la section de passage des microperforations des canaux 46. L'air passera donc de manière préférentielle dans le conduit 30b pour atteindre la sortie 37.

Le réchauffement de la peau externe 22 s'effectue donc par convection au niveau des canaux d'antigivrage 44, et par simple conduction au niveau des canaux d'aspiration adjacents 46.

Depuis le conduit 38, l'air chaud circule également à travers chaque canal à double fonction 42, après avoir emprunté l'orifice 52 correspondant. Au cours de sa circulation à travers chaque canal 42, l'air d'antigivrage est évacué par la multiperforation de la peau externe 22. Il se produit alors un phénomène dit « de transpiration de la peau 22 ». Pour le canal de nez 42, l'air peut aussi éventuellement être évacué par des fentes prévues entre les zones plaquées d'intrados 22c, 24c, comme cela a été schématisé par la flèche 88 sur la figure 9. Cette évacuation de l'air chaud par les fentes permet de ce fait l'antigivrage de la partie intrados du bord d'attaque.

Au cours de cette phase d'antigivrage, comme évoqué précédemment, l'air occupant le conduit 56 ne peut pénétrer au sein de la conduite 30b via le conduit de jonction 58, en raison de la fermeture de la vanne 60. De plus, les canaux 46 d'aspiration de la couche limite ne sont pas alimentés en air chaud via le conduit 38, donc restent inopérants durant cette phase d'antigivrage.

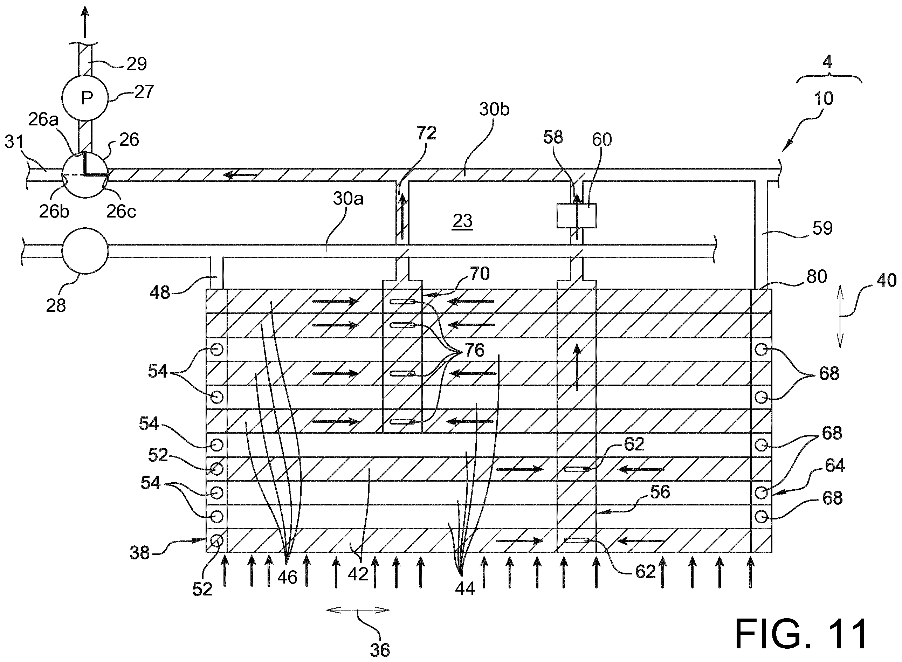

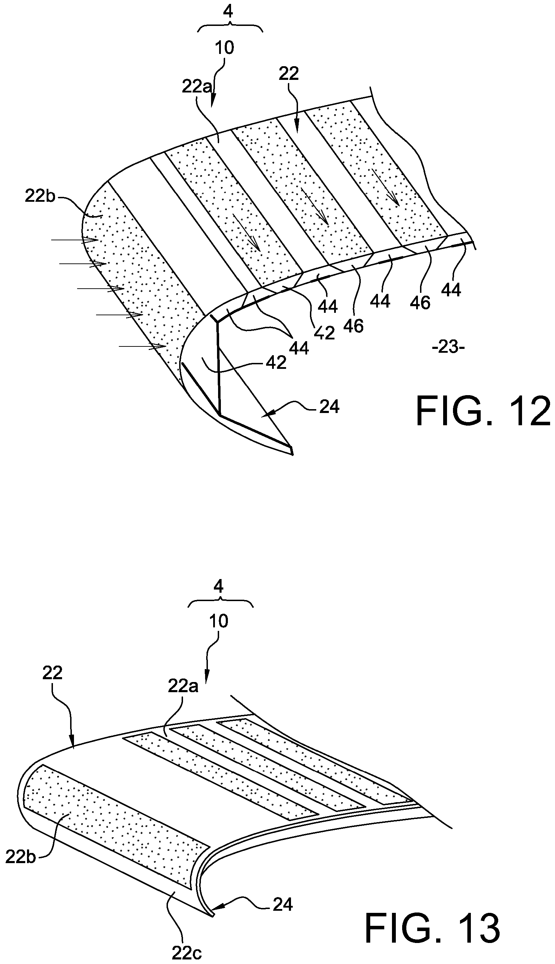

En référence aux figures 11 à 13, il est représenté le fonctionnement du système 20 lors d'une phase d'aspiration de la couche limite sur la partie avant 10 de l'aile 4. Sur ces figures, les flèches symbolisent la direction de circulation de l'air aspiré à travers les différents éléments du système. De plus, les zones grisées et hachurées correspondent aux zones empruntées par l'air d'aspiration.

Pendant la phase d'aspiration, la vanne 28 est fermée. D'autre part, la vanne 26 établit la communication fluidique entre les deux voies 26a, 26c, de manière à faire communiquer la conduite 30b avec la conduite d'aspiration 29 recevant la pompe 27. De plus, la vanne 60 est commandée de manière à autoriser le passage entre le conduit 56 et la conduite 30b.

En amont, l'aspiration s'effectue tout d'abord au niveau de la multiperforation de chaque canal à double fonction 42, par la zone de nez 22b et la zone extrados 22a. Cet air rejoint ensuite le conduit 56 via les orifices 62, puis pénètre dans la conduite 30b après avoir transité par la vanne ouverte 60.

L'aspiration s'effectue également par les multiperforations des canaux d'aspiration 46, au niveau de la zone d'extrados 22a de la peau externe 22. L'air circulant dans les canaux 46 rejoint ensuite le conduit 70 via les orifices 76, puis pénètre dans la conduite 30b après avoir transité par le conduit de jonction 72.

Durant cette phase d'aspiration de la couche limite, puisque les canaux d'antigivrage 44 ne sont pas multiperforés, ils restent inopérants.

Dans le premier mode de réalisation préféré qui a été décrit ci-dessus, la conception est du type « concept longitudinal », avec une circulation de l'air d'antigivrage dite « simple » (de l'anglais « simple flow »). Cette circulation simple implique que l'air d'antigivrage circule d'une extrémité à l'autre de la partie de l'aile concernée par le système, dans un sens unique selon la direction d'envergure. Néanmoins, l'invention s'applique également à une conception longitudinale dans laquelle la circulation de l'air d'antigivrage est dite « centrée » (de l'anglais « center flow »), avec des conduits d'admission d'air d'antigivrage centrés sur la partie de l'aile concernée par le système, et des conduits de collecte d'air d'antigivrage agencés aux extrémités de cette même partie. Dans ce cas de figure, l'air d'antigivrage circule longitudinalement du centre vers les extrémités de l'aile. L'invention s'applique encore à une conception longitudinale dans laquelle la circulation de l'air d'antigivrage s'opère de manière inversée par rapport à la précédente solution (en anglais, dénommée « baseline flow »). Dans ce cas, les conduits de collecte d'air d'antigivrage sont centrés sur la partie de l'aile concernée par le système, et les conduits d'admission d'air d'antigivrage sont agencés aux extrémités de cette même partie. L'air d'antigivrage circule alors longitudinalement des extrémités de l'aile, vers le centre.

Par ailleurs, l'invention s'applique également aux conceptions du type « concept corde », dans lesquelles l'essentiel des canaux suivent non pas la direction d'envergure 36 de l'aile, mais suivent la direction de corde 40. A cet égard, il va à présent être décrit un second mode de réalisation préféré de l'invention, dans lequel le système adopte une conception corde. Ce second mode de réalisation présente de nombreuses similitudes avec le premier mode. Par conséquent, sur les figures, les éléments portant les mêmes références numériques correspondent à des éléments identiques ou similaires.

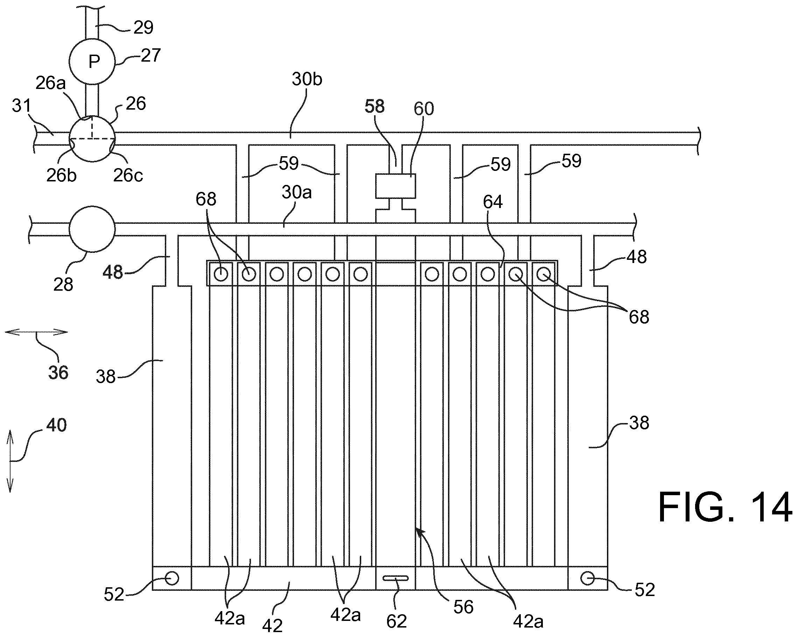

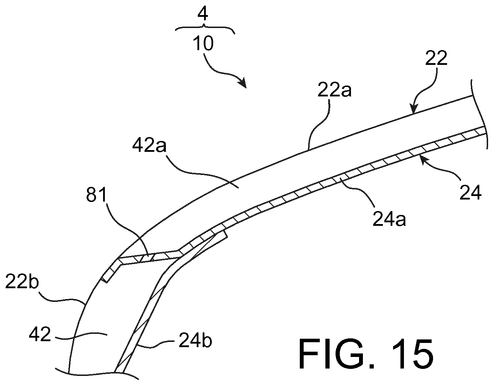

En référence tout d'abord aux figures 14 et 15, il est noté que le système 20 comporte, d'une manière identique à celle exposée dans le cadre du premier mode, les deux conduites 30a, 30b, la vanne trois voies 26, la vanne 28, la conduite d'échappement 31 et la conduite d'aspiration 29. Il comprend également un canal principal à double fonction 42, situé au niveau du nez de l'aile tout comme le canal 42 le plus avant du mode de réalisation précédent.

Il est également prévu deux conduits d'admission d'air d'antigivrage 38, même si un seul conduit serait suffisant. Ces conduits 38 sont raccordés à la conduite 30a en aval de la vanne 28, à des extrémités opposées du système selon la direction d'envergure 36. Plus précisément, ce raccordement s'effectue par un conduit de jonction 48 de faible longueur, situé sur ou à proximité d'une extrémité arrière de chaque conduit 38. Chaque conduit de jonction 48 établit une communication fluidique permanente entre la conduite 30a en aval de la vanne 26, et son conduit 38 associé.

A son extrémité avant, chaque conduit d'admission d'air d'antigivrage 38 communique avec une extrémité du canal principal 42 à double fonction, par le biais d'un orifice d'entrée d'air d'antigivrage 52 pratiqué à travers la peau interne 24. Cet orifice 52 permet l'établissement d'une communication directe entre la conduite 30a et le conduit 38.

Les conduits 38 sont réalisés d'une manière identique ou similaire à celle exposée dans le cadre du premier mode de réalisation.

L'une des particularités réside ici dans le fait que les autres canaux sont également à double fonction, en étant multiperforés, éventuellement de manière non régulière. Ils sont dits canaux secondaires à double fonction 42a. Ces canaux 42a s'étendent chacun selon une direction de corde 40 en étant agencés dans des plans parallèles espacés les uns des autres selon la direction d'envergure 36. Ces canaux 42a ne sont pas droits, mais ils suivent chacun le profil aérodynamique de l'aile en étant définis entre les peaux externe et interne 22, 24 de l'aile.

Chaque canal secondaire 42a présente une extrémité avant communiquant avec le canal principal 42, par le biais d'un ou plusieurs orifices traversants 81 pratiqués dans une peau de délimitation de ce canal principal 42, comme cela a été représenté sur la figure 15. Son extrémité arrière communique avec un conduit de collecte d'air d'antigivrage 64, qui est ici parallèle aux conduites 30a, 30b. La communication entre le conduit 64 et les canaux 42a s'effectue par le biais d'orifices de collecte d'air d'antigivrage 68, également pratiqués à travers la peau interne 24.

Une communication fluidique permanente est assurée entre le conduit 64 et la conduite 30b, par l'intermédiaire de plusieurs conduits de jonction 59 agencés orthogonalement à la conduite 30b et au conduit 64.

Le système 20 comporte en outre un conduit de collecte d'air d'aspiration 56, agencé centré entre les deux conduits 38 et parallèle à ceux-ci. Ce conduit 56 est raccordé à la conduite d'échappement d'air d'antigivrage 30b, à l'aide d'un conduit de jonction 58 de faible longueur, situé sur ou à proximité d'une extrémité arrière du conduit 56. Le conduit de jonction 56 est équipé d'une vanne commandée 60 autorisant ou interdisant le passage de l'air d'aspiration entre le conduit 56 et la conduite 30b, en fonction de sa position. A son extrémité avant, le conduit de collecte d'air d'aspiration 56 communique avec le canal principal 42 à double fonction, par le biais d'un orifice d'aspiration 62 pratiqué à travers la peau interne 24. Néanmoins, il est noté qu'en fonction des besoins et contraintes rencontrés, le conduit 56 et la vanne 60 pourraient être supprimés. Dans ce cas de figure, tout l'air aspiré transite alors par les canaux secondaires 42a à double fonction.

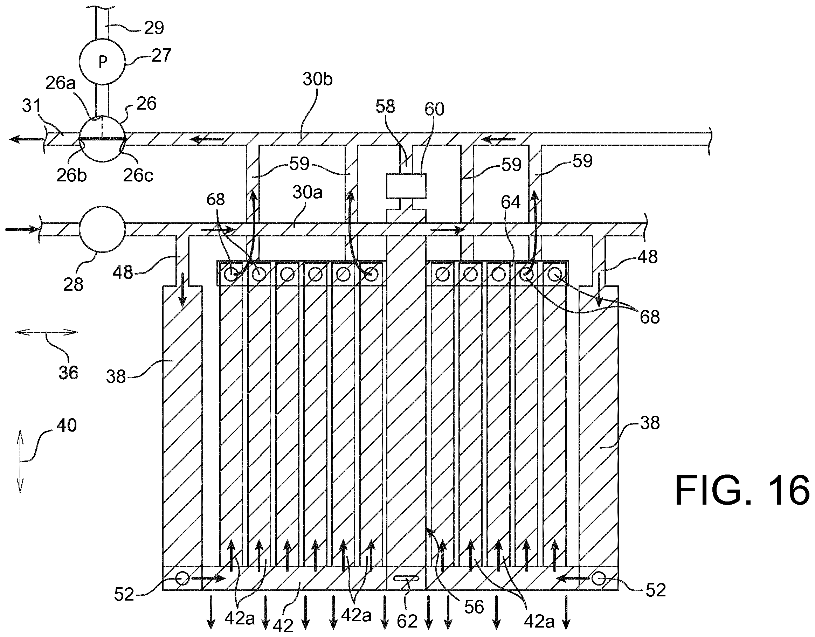

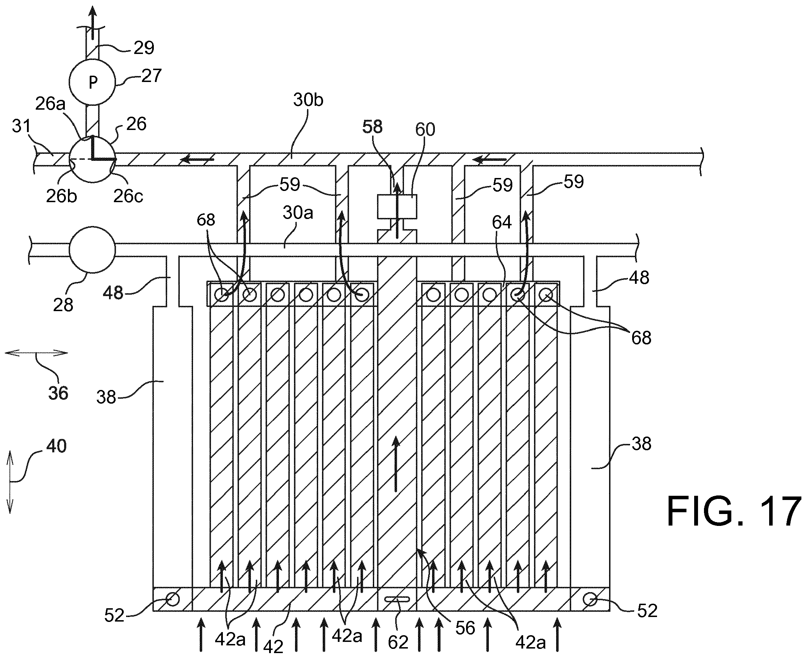

Les figures 16 et 17 montrent respectivement le fonctionnement du système 20 en phase d'antigivrage et en phase d'aspiration. Elles correspondent respectivement aux figures 8 et 11 du premier mode de réalisation.

Pendant la phase d'antigivrage, la vanne 26 établit la communication fluidique entre les deux voies 26b, 26c, de manière à faire communiquer la conduite 30b avec la conduite d'échappement 31. De plus, la vanne 60, lorsqu'une telle vanne est prévue, est commandée de manière à interdire le passage entre le conduit 56 et la conduite 30b.

Pour activer cette fonction d'antigivrage, la vanne WAIV 28 est commandée de manière à laisser circuler de l'air chaud provenant des moteurs, à travers la conduite dédiée 30a. L'air transite ensuite par les conduits de jonction 48 avant de rejoindre les conduits d'admission d'air d'antigivrage 38, à partir desquels cet air chaud est distribué dans le canal principal à double fonction 42 via les orifices 52. L'air transite ensuite par les canaux secondaires 42a, avant d'être collecté par le conduit 64 via les orifices 68, puis l'air emprunte les canaux de jonction 59 avant d'atteindre la conduite 30b. Il s'extrait de cette conduite 30a via la vanne trois voies 26, puis circule à travers la conduite d'échappement 31 en direction d'une zone située en dehors de l'aile.

Au cours de sa circulation à travers chaque canal 42, 42a à double fonction, l'air d'antigivrage est évacué par la multiperforation de la peau externe 22. Il se produit alors un phénomène de transpiration de la peau 22. Pour le canal principal 42, l'air peut aussi éventuellement être évacué par des fentes prévues entre les zones plaquées d'extrados 22c, 24c, comme cela a été schématisé par la flèche 88 sur la figure 9.

Au cours de cette phase d'antigivrage, comme évoqué précédemment, l'air occupant le conduit 56 ne peut pénétrer au sein de la conduite 30b via le conduit de jonction 58, en raison de la fermeture de la vanne 60.

En référence à la figure 17 représentant le fonctionnement du système 20 lors d'une phase d'aspiration de la couche limite sur la partie avant 10 de l'aile 4, il est noté que la vanne 26 établit la communication fluidique entre les deux voies 26a, 26c, de manière à faire communiquer la conduite 30b avec la conduite d'aspiration 29 recevant la pompe 27. De plus, la vanne 60, lorsque celle-ci ainsi que le conduit 56 sont prévus, est commandée de manière à autoriser le passage entre le conduit 56 et la conduite 30b.

L'aspiration s'effectue au niveau de la multiperforation de chaque canal à double fonction 42, 42a. Cet air rejoint ensuite le conduit 64, qui remplit donc également une fonction durant cette phase d'aspiration. Il emprunte ensuite les conduits de raccord 59 avant de rejoindre la conduite 30b. Egalement, l'air aspiré par le canal principal 42 rejoint le conduit 56 via les orifices 62, puis pénètre dans la conduite 30b après avoir transité par la vanne ouverte 60.

L'air aspiré est alors évacué par la conduite d'aspiration 29, en aval de la vanne trois voies 26.

Bien entendu, diverses modifications peuvent être apportées par l'homme du métier à l'invention qui vient d'être décrite, uniquement à titre d'exemples non limitatifs. Par exemple, il est noté qu'une même surface portante telle qu'une aile peut être équipée de plusieurs systèmes tel que celui décrit de manière détaillée ci-dessus. Ces systèmes sont préférentiellement disposés de manière adjacente le long de la direction d'envergure. Ils peuvent alors partager un ou plusieurs éléments, par exemple avoir en commun les conduites 30a, 30b, et/ou la conduite 38.

## Revendications

1. Système (20) d'antigivrage et d'aspiration de couche limite, destiné à équiper une surface portante (4) d'un aéronef, le système comprenant :
- au moins un canal d'antigivrage (44, 42, 42a) ;
- au moins un canal d'aspiration (46, 42, 42a) délimité en partie par une paroi (22b) multiperforée permettant l'aspiration de la couche limite sur ladite surface portante ;
- un dispositif (26) de contrôle de l'aspiration de la couche limite ;
- un dispositif (28) de contrôle d'antigivrage ;
- une conduite (30b) de collecte de l'air d'aspiration communiquant avec ledit canal d'aspiration (46, 42, 42a) ;
- une conduite (30a) d'alimentation en air d'antigivrage raccordée audit dispositif (28) de contrôle d'antigivrage et communiquant avec ledit canal d'antigivrage (44, 42, 42a) par l'intermédiaire d'un conduit d'admission d'air d'antigivrage (38),
**caractérisé en ce que** le dispositif (26) de contrôle de l'aspiration de la couche limite comporte une vanne à trois voies (26a, 26b, 26c) sur lesquelles sont respectivement raccordées ladite conduite de collecte de l'air d'aspiration (30b), une conduite d'aspiration (29), et une conduite d'échappement d'air d'antigivrage (31),
et **en ce que** le système comporte de plus un conduit de collecte d'air d'antigivrage (64) raccordé d'une part au canal d'antigivrage (44, 42, 42a), et d'autre part à ladite conduite de collecte de l'air d'aspiration (30b).

2. Système selon la revendication 1, **caractérisé en ce que** ladite conduite de collecte de l'air d'aspiration (30b) ainsi que la conduite d'alimentation en air d'antigivrage (30a) sont agencées sensiblement parallèlement, de préférence selon une direction d'envergure (36) de la surface portante.

3. Système selon la revendication 1 ou la revendication 2, **caractérisé en ce qu'**il comporte au moins un canal à double fonction (42, 42a) dans lequel peut alternativement circuler de l'air pour la fonction d'antigivrage et de l'air pour l'aspiration de la couche limite, ledit canal à double fonction étant en partie délimité par la paroi (22b) multiperforée permettant l'aspiration de la couche limite sur ladite surface portante, et **en ce que** ledit canal à double fonction :
- communique avec ledit conduit d'admission d'air d'antigivrage (38) ; et
- de préférence, communique avec un conduit de collecte d'air d'aspiration (56), ce dernier étant relié à ladite conduite de collecte de l'air d'aspiration (30a), de préférence via une vanne commandée (60).

4. Système selon la revendication 3, **caractérisé en ce qu'**il est configuré de sorte que l'air d'antigivrage circulant à travers le canal à double fonction (42) ne pénètre pas dans ledit conduit de collecte d'air d'antigivrage (64).

5. Système selon l'une quelconque des revendications précédentes, **caractérisé en ce qu'**il comprend au moins un conduit secondaire de collecte d'air d'aspiration (70) permettant la communication entre chaque canal d'aspiration de la couche limite (46), et la conduite de collecte de l'air d'aspiration (30b).

6. Système selon l'une quelconque des revendications précédentes, **caractérisé en ce qu'**il comporte plusieurs canaux d'antigivrage (44) et plusieurs canaux d'aspiration de la couche limite (46) sensiblement parallèles, et **en ce qu'**au moins certains des canaux d'antigivrage (44) et des canaux d'aspiration de la couche limite (46) sont agencés en alternance.

7. Système selon la revendication 6, **caractérisé en ce qu'**il comprend successivement, dans une direction de corde (40) à partir d'un bord d'attaque de la surface portante :
- un canal à double fonction (42) ;
- une pluralité desdits canaux d'antigivrage (44) ; puis
- une alternance entre lesdits canaux d'aspiration d'air (46) et les autres canaux d'antigivrage (44),
lesdits canaux d'antigivrage (44), lesdits canaux d'aspiration (46) et ledit canal à double fonction (42) s'étendant parallèlement les uns aux autres, selon une direction d'envergure (36) de la surface portante.

8. Système selon l'une quelconque des revendications précédentes, combinée aux revendications 3 et 5, **caractérisé en ce que** le conduit d'admission d'air d'antigivrage (38), chaque conduit de collecte d'air d'aspiration (56), chaque conduit secondaire de collecte d'air d'aspiration (70) et le conduit de collecte d'air d'antigivrage (64) suivent chacun le profil aérodynamique de la surface portante, en étant agencés dans des plans parallèles, espacés les uns des autres selon une direction d'envergure (36) de cette surface portante.

9. Système selon la revendication 3, **caractérisé en ce qu'**il comprend une pluralité de canaux à double fonction (42) dans lesquels peut alternativement circuler de l'air pour la fonction d'antigivrage et de l'air pour l'aspiration de la couche limite, parmi lesquels :
- un canal principal à double fonction (42), communiquant directement avec ledit conduit d'admission d'air d'antigivrage (38) ; et
- des canaux secondaires à double fonction (42a), communiquant d'une part avec le canal principal à double fonction (42) et d'autre part avec ledit conduit de collecte d'air d'antigivrage (64), lesdits canaux secondaires à double fonction (42a) étant agencés sensiblement parallèlement entre eux et sensiblement orthogonalement au canal principal à double fonction (42) et au conduit de collecte d'air d'antigivrage (64).

10. Système selon la revendication 9, **caractérisé en ce que** lesdits canaux secondaires à double fonction (42a) sont agencés dans des plans parallèles, espacés les uns des autres selon une direction d'envergure (36) de la surface portante.

11. Système selon la revendication 9 ou la revendication 10, **caractérisé en ce que** la conduite de collecte de l'air d'aspiration (30b), la conduite d'alimentation en air d'antigivrage (30a), le canal principal à double fonction (42) et le conduit de collecte d'air d'antigivrage (64) sont agencés sensiblement parallèlement selon une direction d'envergure (36) de la surface portante.

12. Système selon l'une quelconque des revendications 9 à 11, **caractérisé en ce que** la conduite de collecte de l'air d'aspiration (30b) et le conduit de collecte d'air d'antigivrage (64) communiquent entre eux par l'intermédiaire d'au moins un conduit de jonction (59).

13. Surface portante (4) pour aéronef comprenant au moins un système (20) d'antigivrage et d'aspiration de couche limite selon l'une quelconque des revendications précédentes.

14. Surface portante selon la revendication précédente, **caractérisée en ce qu'**elle est une aile (4) ou un empennage (6, 7).

15. Aéronef (1) comprenant au moins une surface portante (4) selon l'une quelconque des revendications 13 et 14, ou au moins un système (20) d'antigivrage et d'aspiration de couche limite selon l'une quelconque des 1 à 12.

## Patentansprüche

1. System (20) zum Enteisen und zum Absaugen der Grenzschicht, das zur Ausstattung einer Tragfläche (4) eines Luftfahrzeugs bestimmt ist, wobei das System Folgendes umfasst:
- wenigstens einen Enteisungskanal (44, 42, 42a);
- wenigstens einen Absaugkanal (46, 42, 42a), der teilweise durch eine vielfach perforierte Wand (22b) begrenzt ist und das Absaugen der Grenzschicht auf der Tragfläche ermöglicht;
- eine Vorrichtung (26) zur Steuerung des Absaugens der Grenzschicht;
- eine Vorrichtung (28) zur Steuerung der Enteisung;
- eine Leitung (30b) zum Sammeln der Absaugluft, die mit dem Absaugkanal (46, 42, 42a) kommuniziert;
- eine Leitung (30a) zur Versorgung mit Enteisungsluft, die an die Vorrichtung (28) zur Steuerung der Enteisung angeschlossen ist und mit Hilfe einer Leitung zur Zufuhr von Enteisungsluft (38) mit dem Enteisungskanal (44, 42, 42a) kommuniziert,
**dadurch gekennzeichnet, dass** die Vorrichtung (26) zur Steuerung des Absaugens der Grenzschicht ein Ventil mit drei Wegen (26a, 26b, 26c) umfasst, an die die Leitung zum Sammeln der Absaugluft (30b), eine Absaugleitung (29) beziehungsweise eine Leitung zum Abführen von Enteisungsluft (31) angeschlossen sind,
und dass das System ferner eine Leitung zum Sammeln von Enteisungsluft (64) umfasst, die einerseits an den Enteisungskanal (44, 42, 42a) und andererseits an die Leitung zum Sammeln der Absaugluft (30b) angeschlossen ist.

2. System nach Anspruch 1, **dadurch gekennzeichnet, dass** die Leitung zum Sammeln der Absaugluft (30b) sowie die Leitung zur Versorgung mit Enteisungsluft (30a) im Wesentlichen parallel zueinander angeordnet sind, vorzugsweise entlang einer Spannweitenrichtung (36) der Tragfläche.

3. System nach Anspruch 1 oder Anspruch 2, **dadurch gekennzeichnet, dass** es wenigstens einen Kanal mit doppelter Funktion (42, 42a) umfasst, in dem alternativ Luft für die Enteisungsfunktion und Luft für das Absaugen der Grenzschicht zirkulieren kann, wobei der Kanal mit doppelter Funktion teilweise durch die vielfach perforierte Wand (22b) begrenzt ist, die das Absaugen der Grenzschicht auf der Tragfläche ermöglicht, und dass der Kanal mit doppelter Funktion:
- mit der Leitung zum Zuführen von Enteisungsluft (38) kommuniziert; und
- vorzugsweise mit einer Leitung zum Sammeln von Absaugluft (56) kommuniziert, wobei diese letztere mit der Leitung zum Sammeln der Absaugluft (30a) vorzugsweise über ein gesteuertes Ventil (60) verbunden ist.

4. System nach Anspruch 3, **dadurch gekennzeichnet, dass** es derart konfiguriert ist, dass die Enteisungsluft, die durch den Kanal mit doppelter Funktion (42) hindurch zirkuliert, nicht in die Leitung zum Sammeln von Enteisungsluft (64) eindringt.

5. System nach einem der vorhergehenden Ansprüche, **dadurch gekennzeichnet, dass** es wenigstens eine sekundäre Leitung zum Sammeln von Abstaugluft (70) umfasst, die die Kommunikation zwischen jedem Kanal zum Absaugen der Grenzschicht (46) und der Leitung zum Sammeln der Absaugluft (30b) ermöglicht.

6. System nach einem der vorhergehenden Ansprüche, **dadurch gekennzeichnet, dass** es mehrere Enteisungskanäle (44) und mehrere Kanäle zum Absaugen der Grenzschicht (46) umfasst, die im Wesentlichen parallel sind, und dass wenigstens einige von den Enteisungskanälen (44) und den Kanälen zum Absaugen der Grenzschicht (46) alternierend angeordnet sind.

7. System nach Anspruch 6, **dadurch gekennzeichnet, dass** es sukzessive in einer Sehnenrichtung (40) ausgehend von einer Anströmkante der Tragfläche Folgendes umfasst:
- einen Kanal mit doppelter Funktion (42);
- eine Mehrzahl der Enteisungskanäle (44); und dann
- eine alternierende Anordnung der Kanäle zum Absaugen von Luft (46) und der anderen Enteisungskanäle (44), wobei sich die Enteisungskanäle (44), die Absaugkanäle (46) und der Kanal mit doppelter Funktion (42) parallel zueinander entlang einer Spannweitenrichtung (36) der Tragfläche erstrecken.

8. System nach einem der vorhergehenen Ansprüche in Kombination mit den Ansprüchen 3 und 5, **dadurch gekennzeichnet, dass** die Leitung zur Zufuhr von Enteisungsluft (38), jede Leitung zum Sammeln von Absaugluft (56), jede sekundäre Leitung zum Sammeln von Absaugluft (70) und die Leitung zum Sammeln von Enteisungsluft (64) jeweils dem aerodynamischen Profil der Tragfläche folgen, wobei sie in parallelen Ebenen angeordnet sind, die voneinander entlang einer Spannweitenrichtung (36) dieser Tragfläche beabstandet sind.

9. System nach Anspruch 3, **dadurch gekennzeichnet, dass** es eine Mehrzahl von Kanälen mit doppelter Funktion (42) umfasst, in denen alternativ Luft für die Enteisungsfunktion und Luft für das Absaugen der Grenzschicht zirkulieren kann, worunter:
- ein Hauptkanal mit doppelter Funktion (42), der direkt mit der Leitung zur Zufuhr von Enteisungsluft (38) kommuniziert; und
- sekundäre Kanäle mit doppelter Funktion (42a), die einerseits mit dem Hauptkanal mit doppelter Funktion (42) und andererseits mit der Leitung zum Sammeln von Enteisungsluft (64) kommunizieren, wobei die sekundären Kanäle mit doppelter Funktion (42a) im Wesentlichen parallel zueinander und im Wesentlichen orthogonal zum Hauptkanal mit doppelter Funktion (42) und zu der Leitung zum Sammeln von Enteisungsluft (64) angeordnet sind.

10. System nach Anspruch 9, **dadurch gekennzeichnet, dass** die sekundären Kanäle mit doppelter Funktion (42a) in parallelen Ebenen angeordnet sind, die voneinander entlang einer Spannweitenrichtung (36) der Tragfläche beabstandet sind.

11. System nach Anspruch 9 oder Anspruch 10, **dadurch gekennzeichnet, dass** die Leitung zum Sammeln der Absaugluft (30b), die Leitung zur Versorgung mit Enteisungsluft (30a), der Hauptkanal mit doppelter Funktion (42) und die Leitung zum Sammeln von Enteisungsluft (64) im Wesentlichen parallel entlang einer Spannweitenrichtung (36) der Tragfläche angeordnet sind.

12. System nach einem der Ansprüche 9 bis 11, **dadurch gekennzeichnet, dass** die Leitung zum Sammeln der Absaugluft (30b) und die Leitung zum Sammeln von Enteisungsluft (64) miteinander mit Hilfe wenigstens einer Verbindungsleitung (59) kommunizieren.

13. Tragfläche (4) für ein Luftfahrzeug, umfassend wenigstens ein System (20) zum Enteisen und zum Absaugen der Grenzschicht nach einem der vorhergehenden Ansprüche.

14. Tragfläche nach dem vorhergehenden Anspruch, **dadurch gekennzeichnet, dass** sie ein Flügel oder ein Leitwerk (6, 7) ist.

15. Luftfahrzeug (1), umfassend wenigstens eine Tragfläche (4) nach einem der Ansprüche 13 und 14, oder wenigstens ein System (20) zum Enteisen und zum Absaugen der Grenzschicht nach einem der Ansprüche 1 bis 12.

## Claims

1. System (20) for anti-icing and boundary layer suction, intended to be provided on an aerofoil (4) of an aircraft, the system comprising:
- at least one anti-icing channel (44, 42, 42a);
- at least one suction channel (46, 42, 42a) delimited partially by a multiperforated wall (22b) allowing for the suction of the boundary layer on said aerofoil;
- a device (26) for monitoring boundary layer suction;
- a device (28) for monitoring anti-icing;
- a duct (30b) for collecting the suction air communicating with said suction channel (46, 42, 42a);
- a duct (30a) for supplying anti-icing air connected to said device (28) for monitoring anti-icing and communicating with said anti-icing channel (44, 42, 42a) by the intermediary of duct for the intake of anti-icing air (38),
**characterised in that** the device (26) for monitoring boundary layer suction comprises a three-way valve (26a, 26b, 26c) whereon are respectively connected said duct for collecting the suction air (30b), a suction duct (29), and a duct for discharging anti-icing air (31),
and **in that** the system in addition comprises a duct for collecting anti-icing air (64) connected on the one hand to the anti-icing channel (44, 42, 42a), and on the other hand to said duct for collecting suction air (30b).

2. System according to claim 1, **characterised in that** said duct for collecting suction air (30b) as well as the duct for supplying anti-icing air (30a) are arranged substantially parallel, preferably along a direction of the wingspan (36) of the aerofoil.

3. System according to claim 1 or claim 2, **characterised in that** it comprises at least one dual function channel (42, 42a) wherein can alternatively circulate air for the anti-icing function and air for the suction of the boundary layer, said dual function channel being partially delimited by the multiperforated wall (22b) that allows for the suction of the boundary layer on said aerofoil, and **in that** said dual function channel:
- communicates with said duct for the intake of anti-icing air (38); and
- preferably, communicates with a duct for collecting suction air (56), the latter being connected to said duct for collecting suction air (30a), preferably via a controlled valve (60).

4. System according to claim 3, **characterised in that** it is configured in such a way that the anti-icing air circulating through the dual function channel (42) does not penetrate into said duct for collecting anti-icing air (64).

5. System according to any preceding claim, **characterised in that** it comprises at least one secondary duct for collecting suction air (70) allowing for the communication between each suction channel of the boundary layer (46), and the duct for collecting suction air (30b).

6. System according to any preceding claim, **characterised in that** it comprises several anti-icing channels (44) and several suction channels of the boundary layer (46) that are substantially parallel, and **in that** at least some of the anti-icing channels (44) and suction channels of the boundary layer (46) are arranged alternately.

7. System according to claim 6, **characterised in that** it comprises successively, in a direction of a chord (40) from the leading edge of the aerofoil:
- a dual function channel (42);
- a plurality of said anti-icing channels (44); then
- an alternation between said air suction channels (46) and the other anti-icing channels (44),
said anti-icing channels (44), said suction channels (46) and said dual function channel (42) extending parallel to one another, along a direction of the wingspan (36) of the aerofoil.

8. System according to any preceding claim, combined with claims 3 and 5, **characterised in that** the duct for the intake of anti-icing air (38), each duct for collecting suction air (56), each secondary duct for collecting suction air (70) and the duct for collecting anti-icing air (64) each follow the aerodynamic profile of the aerofoil, by being arranged in parallel planes, spaced apart from one another along a direction of the wingspan (36) of this aerofoil.

9. System according to claim 3, **characterised in that** it comprises a plurality of dual function channels (42) wherein can alternatively circulate air for the anti-icing function and air for the suction of the boundary layer, among which:
- a main dual function channel (42), communicating directly with said duct for the intake of anti-icing air (38); and
- secondary dual function channels (42a), communicating on the one hand with the main dual function channel (42) and on the other hand with said duct for collecting anti-icing air (64), said secondary dual function channels (42a) being arranged substantially parallel to one another and substantially orthogonally to the main dual function channel (42) and to the duct for collecting anti-icing air (64).

10. System according to claim 9, **characterised in that** said secondary dual function channels (42a) are arranged in parallel planes, spaced from one another along a direction of the wingspan (36) of the aerofoil.

11. System according to claim 9 or claim 10, **characterised in that** the duct for the collection of suction air (30b), the duct for supplying anti-icing air (30a), the main dual function channel (42) and the duct for collecting anti-icing air (64) are arranged substantially parallel along a direction of the wingspan (36) of the aerofoil.

12. System according to any of claims 9 to 11, **characterised in that** the duct for collecting suction air (30b) and the duct for collecting anti-icing air (64) communicate with one another by the intermediary of at least one junction duct (59).

13. Aerofoil (4) for aircraft comprising at least one anti-icing and boundary layer suction system (20) according to any preceding claim.

14. Aerofoil according to the preceding claim, **characterised in that** it is a wing (4) or a tailplane (6, 7).

15. Aircraft (1) comprising at least one aerofoil (4) according to any of claims 13 and 14, or at least one anti-icing and boundary layer suction system (20) according to any of claims 1 to 12.
